# EUROPÄISCHE PATENTSCHRIFT

(11) **EP 0 721 859 B1**
(45) Veröffentlichungstag und Bekanntmachung des Hinweises auf die Patenterteilung: **04.08.1999**
(21) Anmeldenummer: 96103367.7
(22) Anmeldetag: 15.02.1994
(51) Int. Cl.: B60R 7/08, B60R 1/12, A45C 11/04

(54) **Brillenhalterung, insbesondere zum Einbau in Kraftfahrzeugen**
Spectacles dolder in particular for installation in motor vehicles
Porte lunettes à monter dans des véhicules en particulier

(30) Priorität: 15.02.1993 CH 44693; 07.05.1993 CH 140393; 18.06.1993 CH 181393; 19.11.1993 CH 345193
(43) Veröffentlichungstag der Anmeldung: 17.07.1996
(62) Teilanmeldung aus: 94908311.7
(73) Patentinhaber: fischerwerke Artur Fischer GmbH & Co. KG, 72178 Waldachtal (DE)
(72) Erfinder: Ackeret, Peter, 8700 Küsnacht (CH)

(56) Entgegenhaltungen:
- DE-A- 4 122 472
- FR-A- 1 517 848
- FR-A- 2 648 770
- GB-A- 522 357
- US-A- 2 692 043
- US-A- 4 275 913

## Beschreibung

Die vorliegende Erfindung betrifft eine Brillenhalterung, insbesondere für den Einbau in Kraftfahrzeugen (Kfzg.).

Der Gebrauch von Seh- und Sonnenbrillen in Kfzg. ist weit verbreitet. Insbesondere für den Fahrer muss die Brille bei plötzlich auftretender Blendung oder Abdunklung, beispielsweise beim Durchfahren von Tunnels, oft kurzfristig während der Fahrt handhabbar sein, sodass dazu lediglich eine Hand zur Verfügung steht. Es ist daher erforderlich, dass die Brille im Kfzg. so aufbewahrt werden kann, dass sie vom Fahrer einhändig in die Aufbewahrungsvorrichtung eingelegt bzw. aus dieser entnommen werden kann.

Dabei sollen auch die Brillenbügel einhändig auf- und zugeklappt werden können, ohne dass dazu eine den Fahrer ablenkende Aufmerksamkeit erforderlich ist.

Einerseits soll die Brille problemlos und leichtgängig in die Aufbewahrungsvorrichtung eingelegt und aus dieser entnommen werden können, andererseits muss die Brille so gut in der Aufbewahrungsvorrichtung plaziert und festgehalten werden, dass auch schwergängige Brillenbügel auf- und zugeklappt werden können, ohne dass die Brille dabei aus der Aufbewahrungsvorrichtung gerissen oder deformiert werden kann.

Im aufbewahrten Zustand soll die Brille vor Staub, Verschmutzung und Verkratzen geschützt sein. Ebenso ist eine Abschirmung gegen Sonneneinstrahlung erwünscht. Damit die Bedienung durch den Fahrer während der Fahrt möglich ist, muss die Vorrichtung einerseits im Kfzg. so anbringbar und bedienbar sein, dass der Blick des Fahrers dazu nicht von der Strasse weichen muss. Andererseits darf die Sicht des Fahrers durch die Vorrichtung nicht beinträchtigt werden. Die Verwendung der Vorrichtung in zahlreichen verschiedenen Kfzg.-Modellen erfordert ferner eine möglichst universelle Einbauart, die in den einzelnen Kfzg.-Modellen nur minimale und kostengünstige Anpassungen notwendig macht.

Brillen sind in unzähligen Ausführungen auf dem Markt erhältlich. Form, Höhe, Breite und Dicke sowie die Nasenausnehmung und die Anordnung der Bügel variieren in einem grossen Streubereich. Es gibt auch zahlreiche Brillenmodelle in sehr empfindlichen Ausführungen, die sich bei Anwendung von Druck leicht deformieren lassen.

Aus der US-A 4,695,026 ist eine Brillenhalterung mit einer Aufnahme zum Abstützen einer Schmalseite einer Brille sowie einer Klammer zum Halten der Brille auf einer gegenüberliegenden Schmalseite bekannt. Die Aufnahme ist eine Art Steg, der beispielsweise von einem Armaturenbrett eines Kraftfahrzeugs abstehend anbringbar ist und der einen Nasenbügel einer eingelegten Brille untergreift. Die Klammer ist federbelastet, greift an einer Schalseite der Brille an und drückt sie gegen die Aufnahme. Ist keine Brille in die bekannte Brillenhalterung eingesetzt, so liegt die Klammer auf der Aufnahme auf. Daher kann die Klammer beim Einsetzen der Brille nicht mit dieser von der Aufnahme weggedrückt werden sondern muß von Hand weggedrückt werden, damit die Brille in die Brillenhalterung eingesetzt werden kann. Das Einsetzen der Brille in die bekannte Brillenhalterung erfordert zumindest einiges an Übung und Geschicklichkeit, wenn es mit einer Hand erfolgen soll und beansprucht die Aufmerksamkeit des Fahrers.

Aus der FR-A2 212 118, die als gattungsbildend angesehen werden kann, ist eine Brillenhalterung bekannt die aus einem ebenen Zuschnitt besteht, an dem durch Falzen entlang dreier zueinander paralleler Linien vier Klappen gebildet sind. Die Klappen sind um ihre Falze schwenkbar miteinander verbunden. Dabei bildet eine erste Klappe eine Vorderwand, eine zweite einen Boden, eine dritte eine Rückwand und die vierte einen Deckel. Durch Ausschnitte in der ersten, der dritten und der vierten Klappe ist ein Band gezogen, dessen eine Ende an der ersten Klappe fest angebracht ist und dessen anderes Ende, das durch den Deckel hindurchgezogen ist, zum Verschließen der Brillenhalterung mittels eines Klettverschlußes oder dgl. mit dem einen Ende des Bandes lösbar verbindbar ist. Ein Abschnitt des Bandes zwischen Vorder- und Rückwand der Brillenhalterung bildet eine Nasenstütze für eine in die Brillenhalterung eingelegte Brille. Das Band kann durch die Ausschnitte in den Klappen gleiten d.h. es hält diese nicht in ihrer Lage zueinander. Diese Brillenhalterung gibt einer eingelegten Brille nur dann Halt, wenn das Band geschlossen ist. Das Einsetzen einer Brille in die Brillenhalterung ist deswegen schwer zu bewerkstelligen.

Der Erfindung liegt die Aufgabe zugrunde, eine Halterung zur Aufbewahrung und Ablage von verschiedenartigen Brillenmodelle, insbesondere für Kraftfahrzeuge zu schaffen, in welcher die Brillen geschützt sind und einhändig abgelegt bzw. entnommen werden können.

Die Lösung dieser Aufgabe wird mit den Merkmalen des Anspruchs 1 erreicht.

Die erfindungsgemäße Brillenhalterung besteht aus einem Träger und einer an diesem angeordneten Aufnahme zum Abstützen einer Schmalseite einer Brille, sowie einer federbelasteten Klammer, die die Brille übergreift und gegen die Aufnahme drückt, so daß die Brille gehalten wird. Dabei weist die Klammer einen Abstand von der Aufnahme auf, wenn keine Brille eingesetzt ist. Dadurch kann die Brille einhändig aus der Brillenhalterung entnommen bzw. in diese eingesetzt und die Brillenbügel in den Brillen auf- und zugeklappt werden. Damit eignet sich die Brillenhalterung insbesondere zum Einbau in Kraftfahrzeugen, da aus Sicherheitsgründen eine einhändige Entnahme und Ablage erforderlich ist.

Die Brillenhalterung ist als einheitliche Baugruppe ausgebildet und kann in verschiedenartigen Schutzgehäusen eingebaut - und mittels einer Ausfahrmechanik von einer inneren Raststellung, in welcher die Brillenhalterung im wesentlichen im Schutzgehäuse eingeschlossen ist, in eine äußere Raststellung, in welcher die Brille bequem aus der Brillenhalterung entnommen bzw. in diese eingesetzt werden kann, bewegt werden.

Weitere Merkmale und Vorteile der Erfindung ergeben sich aus den Unteransprüchen bzw. aus der Beschreibung von Ausführungsbeispielen.

Ausführungsbeispiele der Erfindung werden nachstehend unter Bezugnahme auf die beigefügten Zeichnungen näher erläutert.
- Fig. 1 und 2: zeigen eine schematische Frontansicht bzw. einen Querschnitt einer ersten Ausführungsform einer erfindungsgemäßen Brillenhalterung
- Fig. 3 und 4: zeigen in schematischer Frontansicht bzw. im Querschnitt eine weitere Ausführungsform der Brillenhalterung.

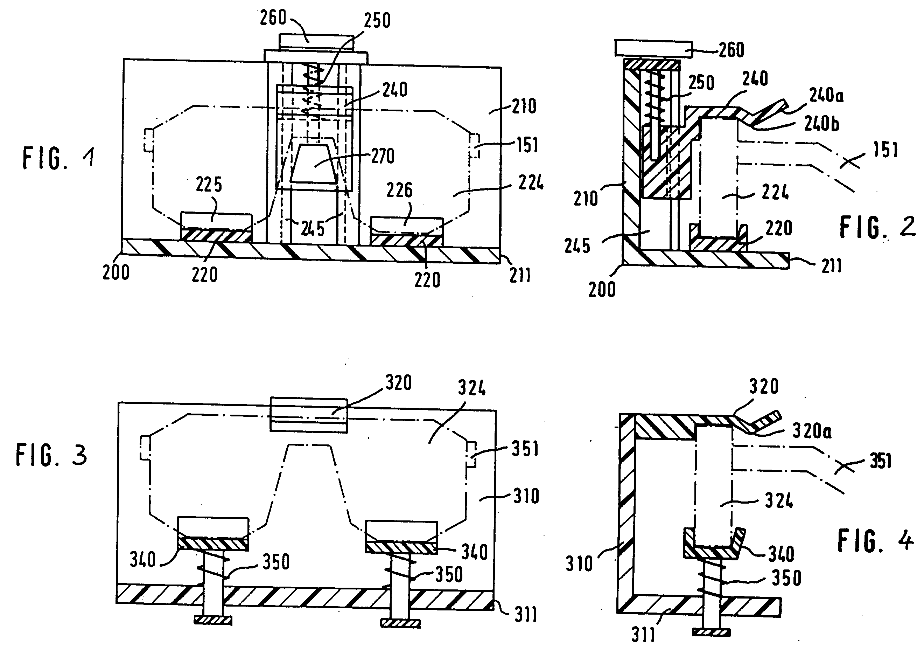

In den Fig. 1 und 2 wird eine Ausführungsform einer Brillenhalterung gezeigt, bei welcher die Brille direkt von vorne eingesetzt bzw. entnommen werden kann.

Der Träger 200 hat einen L-förmigen Querschnitt mit einer Rückwand 210 und einer Bodenwand 211. Auf der Bodenwand 211 sind zwei U-förmige Aufnahmen 220 angeordnet, in welche die unteren Randsegmente 225, 226 der Brille 224 eingesetzt werden.

Die Klammer 240 ist in der Mitte der Brillenhalterung angeordnet und in einer Führung 245 der Rückwand 210, gegen die Kraft der Feder 250 vertikal verschieblich.

Nachdem die Brille 224 in die Aufnahmen 220 eingesetzt worden ist, kann die Brille mit den Aufnahmen 220 als "Drehpunkt" gegen den Einlauf 240a der Klammer 240 geschwenkt werden. Dabei kann die Klammer 240 gegen die Kraft der Feder 250 nach oben weichen, bis die Nase 240b hinter der Brille 224 einrastet und diese in der Brillenhalterung verriegelt. Zur Entnahme kann die Brille 224 nach vorne gekippt werden. Dadurch wird die Nase 240b nach oben ausgelenkt und die Brille 224 freigegeben.

Zum Anpassen der Brillenhalterung an verschiedene Brillengrössen kann der Abstand zwischen den Aufnahmen 220 und der Klammer 240 über die Verstellschraube 260 manuell verstellt werden.

Alternativ könnte bei dieser Ausführungsform anstelle der beiden U-förmigen Aufnahmen 220 eine, vorzugsweise an der Rückwand 210 angeordnete Zentriernase 270 dienen, welche die Brille 224 nach unten abstützt und gleichzeitig seitlich zentriert.

Figuren 3 und 4 zeigen eine analoge Brillenhalterung wie Figuren 1 und 2, wobei bei dieser Ausführungsform die Aufnahme 320 am oberen Rand der Rückwand 310 angeordnet ist, während die beweglichen Klammern 340 an der Bodenwand 311 über Federn 350 abgestützt sind.

Nachdem die Brille 324 in die Klammern 340 eingesetzt worden ist, werden diese über die Brille 324 gegen die Kraft der Federn 350 soweit nach unten gedrückt, bis die Brille die Nase 320a der Aufnahme 320 passieren kann und hinter dieser einrastet.

Zur Entnahme kann die Brille 324 nach vorne geschwenkt werden. Durch Auflaufen auf die Nase 320a werden die Klammern 340 gegen die Kraft der Federn 350 soweit nach unten gedrückt, bis die Brille von der Nase 320a freigegeben wird und entnommen werden kann.

Bei den Ausführungsformen der Brillenaufnahmen in den Figuren 1 bis 4 können die Brillenbügel 151, 351 bei eingesetzter Brille 224, 324 auf- und zugeklappt werden.

## Patentansprüche

1. Brillenhalterung, insbesondere zum Einbau in ein Kraftfahrzeug, mit einem Träger (200) und einer an diesem angeordneten Aufnahme (220, 320) zum Abstützen einer Schmalseite der Brille (224, 324) sowie einer Klammer (240, 340), welche eine gegenüberliegende Schmalseite der Brille (224, 324) übergreift, wobei die Aufnahme (220, 320) und die Klammer (240, 340) soweit auseinander bewegbar sind, daß die Brille (224, 324) dazwischen eingesetzt werden kann, wobei die Klammer (240, 340) bei nicht eingesetzter Brille (224, 324) einen Abstand von der Aufnahme (220, 320) aufweist, **dadurch gekennzeichnet**, dass die Klammer (240, 340) mittels eines Federelements (250, 350) in Richtung der Aufnahme (220, 320) gedrückt wird, und dass an der Klammer (240, 340) bzw. der Aufnahme (220, 320) Einlaufschrägen (240a) angeordnet sind, so dass sie beim Einsetzen bzw. Entnehmen der Brille (224, 324) aus der Halterung auseinandergedrückt werden.

2. Brillenhalterung nach Anspruch 1, **dadurch gekennzeichnet**, dass Mittel (260) vorgesehen sind, um den Abstand zwischen der Aufnahme (220, 320) und der Klammer (240, 340) manuell zu verstellen.

## Claims

1. A spectacle holder, in particular for installation in motor vehicles, which comprises a carrier (200) and arranged thereon a support (220, 320) for supporting a narrow side of a pair of spectacles (224, 324), and also a clip (240, 340) which engages over the opposite narrow side of the spectacles (224, 324), the support (220, 320) and the clip (240, 340) being able to be moved sufficiently far away from one another so that the spectacles (224, 324) can be inserted therebetween, the clip (240, 340) being spaced from the support (220, 320) when no spectacles (224, 324) are inserted, characterized in that the clip (240, 340) is biassed towards the support (220, 320) by means of a spring element (250, 350), and, so that they are pressed apart as the spectacles (224, 324) are inserted in and removed from the holder, on the clip (240, 340) or on the support (220, 320) there are arranged angled guide members (240a).

2. A spectacle holder according to one of claims 34 or 35, characterized in that means (260) are provided for manual adjustment of the distance between the support (220, 320) and the clip (240, 340).

## Revendications

1. Un porte-lunettes, en particulier à monter dans un véhicule à moteur, comportant un support (200) et un réceptacle (220, 320) disposé sur ce support, pour soutenir un petit côté des lunettes (224, 324), ainsi qu'une pince (240, 340) qui saisit, par dessus, un petit côté opposé des lunettes (224, 324), dans lequel le réceptacle (220, 320) et la pince (240, 340) peuvent s'écarter suffisamment l'un de l'autre pour que les lunettes (224,324) puissent se placer entre eux, dans lequel, les lunettes (224, 324) n'étant pas en place, la pince (240,340) se présente à une certaine distance du réceptacle (220, 320), caractérisé par le fait que la pince (240, 340) est repoussée, au moyen d'un élément élastique (250, 350), en direction du réceptacle (220, 320) et que sur la pince (240, 340) ou sur le réceptacle (220, 320) sont disposés des biais d'entrée (240a) de sorte que lors de la mise en place ou du prélèvement des lunettes, dans le support, pince et réceptacle sont repoussés l'un de l'autre.

2. Porte-lunettes selon la revendication 1, caractérisé par le fait que sont prévus des moyens(260) pour régler manuellement la distance entre le réceptacle (220, 320) et la pince (240, 340).
